# EUROPEAN PATENT APPLICATION

(11) **EP 1 968 004 A1**
(43) Date of publication of application: **10.09.2008**
(21) Application number: 08159360.0
(22) Date of filing: 25.02.2004
(51) Int. Cl.: G06Q 30/00, G06Q 20/00, G07G 1/00, G07G 1/14

(54) **Retail apparatus and associated administration apparatus**

(30) Priority: 25.02.2003 GB 0304264; 06.02.2004 US 774061
(62) Divisional of application: 04100744.4
(71) Applicant: The Light Agency Limited, 535 Kings Road Chelsea London Greater London SW10 0SZ (GB)
(72) Inventor: Lewis, Marc, London, Greater London SW8 3TG (GB); McGuiness, Matthew James, United Kingdom, CR2 0NB (GB)
(74) Representative: Hill, Justin John

(57) **Abstract**

Discount and/or loyalty reward system is arranged to provided discounts to users on the basis of user ids communicated from a user agent to a point of sale terminal. The point of sale terminal requests a list of discounts applicable to the received user id from a discount administration system. The discounts in the returned list are then applied where appropriate to the user's purchases.

## Description

A long-established marketing technique is the provision of "money off" or discount coupons to members of the public. The coupons have been distributed by direct mail, leafleting and inclusion in magazines or newspapers. When members of the public receive such coupons, they can take them to a shop where, on purchasing the relevant product, they can obtain a discount.

The ownership of mobile phones has become ubiquitous in recent years and it has been proposed to send discount coupons to mobile phones, typically for display as a bar code. Recipients of such coupons can display a received coupon on their mobile phone at a check out and receive a discount.

All of the prior art systems attemptto replicate the traditional papercoupon process and often involve validation of coupons. Furthermore, when a consumer is purchasing a large number of items, e.g. a weekly family shop, there may be ten or more relevant coupons. It is time consuming for the consumer to determine which relevant coupons he or she has and then individually display them. This is annoying for the consumer and disliked by shops because it slows the flow of customers through its checkouts.

In order to promote customer loyalty, stores provide machine readable cards to users. These cards typically have a magnetic strip that can be read by the card readers provided at points of sale for authenticating credit cards and the like. When the card is read, points are added to a tally of points associated with the card's holder. The cardholder may then be awarded discounts or other incentives when the points tally reaches a threshold amount.

According to a first aspect of the present invention, there is provided a point of sale terminal comprising:
a scanner means for reading product ids from products;
a machine-to-machine data input device for receiving a user id from a communication user agent;
network communication means; and
processing means operable to accumulate a total purchase price in dependence on product id codes read by the scanner means and store said code values,
wherein the processing means is configured to be responsive to a user id from said data input device to:
transmit said user id to a remote location in a request message via the network communication means;
receive a response to said request message via the network communication means, the response containing a list of product id codes; and
reducing the accumulated purchase price in dependence on matches between elements in said list and said stored product codes.

Thus, only one code needs to be communicated from the user agent to the POS terminal for a consumer to obtain all available discounts and the process of claiming discounts is thereby shortened. The need to generate unique ids for coupons, which becomes difficult when millions of coupons are being issued, is avoided.

The processing means may be configured to be further responsive to a user id from the data input device to report said matches to a remote location via said network communication means. This enables the availability of individual discounts to a consumer to be limited to one or more uses.

The scanner means may be a bar code scanner. The machine-to-machine data input device may comprise said bar code scanner. The processing means may be configured to identify a user id by comparing a code from the bar code scanner with a range of codes not reserved for product ids.

According to a second aspect of the present invention, there is provided a transaction system comprising a point of sale terminal according to the present invention, in which the data input means is a bar code scanner, and a communication user agent, e.g. acommunication user agent or PDA, wherein the communication user agent is operable to display a bar code representing a user id code.

According to a third aspect of the present invention, there is provided a discount administration apparatus comprising:
a WAN interface;
a mobile communication network interface;
a database containing data linking, directly or indirectly, a user id to one or more product ids and associated discount amounts; and
processing means,
wherein the processing means is configured for sending said user id to a communication user agent via the mobile communication network interface and for responding to a request message, containing said user id, received via the WAN interface, by generating a response message containing product ids and discount amounts linked to said user id in the database, and sending the response message to the source of the request message via the WAN interface.

The mobile communication network interface is an interface to a messaging service of a communication user agent network. The processing means is configured to be responsive to a further message, containing said user id and a product id, from said source to remove the link between said user id and the product id in the database.

A transaction system according to the present invention and a discount administration apparatus according to the present invention may be combined in a single system, wherein the discount administration apparatus is located at the remote location and said source is the point of sale terminal.

The communication user agent may be a mobile phone or some other personal communication device, for example a pager-type device or a Blackberry email terminal. The addressing id will generally be a phone number or IMSI number but may be an email address or an IP address, either as a numerical address or a host name, which may be fully qualified.

The scanner means may be other than an optical bar code scanner. For example, it may be a scanner for reading RFID tags.

According to a fourth aspect of the present invention, there is provided a method of providing purchasing inducements to a consumer, the method comprising:
recording a communication user agent addressing id in association with a unique id in a database;
transmitting a representation of said unique id to the communication user agent whose addressing id was recorded in association with it;
associating al least one promotional offer with said unique id;
wirelessly receiving said unique id at a point of sale terminal;
obtaining a defining said offer or offers from a remote station;
making a sale using the point of sale terminal,
wherein the sale price of said sale is modified in dependence said data defining said offer or offers and the goods/ services being sold.

According to the fifth aspect of the present invention, there is also provided system for providing purchasing inducements to a consumer, the apparatus comprising:
a database system recording:
   associations between communication user agent addressing ids and respective unique ids,
   associations between promotional offers and said unique ids;
transmitting means for transmitting representations of said unique id to the communication user agents whose addressing ids are association therewith in the database system;
a point of sale terminal comprising:
   wireless input means for wirelessly receiving said unique ids using said representations, and
   communication means for obtaining data defining offers from a remote station in dependence on received unique ids,
wherein the point of said terminal is configured for modifying the sale price of a sale in dependence the promotional offer data associated with a said received unique id and the goods/services being sold.

Thus, only one code needs to be communicated from the user agent to the POS terminal for a consumer to obtain all available discounts and the process of claiming discounts is thereby shortened. The need to generate unique ids for coupons, which becomes difficult when millions of coupons are being issued, is avoided.

The making of an association between a promotional offer and a unique id may be notified to the communication user agent whose addressing id is associated with said unique id.

If said offer is taken up, the fact of its being taken up may be reported to a remote station. The association between a promotional offer and said unique id may be broken in response to reporting of it having been taken up. Another promotional offer may be associated with said unique id in response to reporting of a previous offer having been taken up.

An association between a promotional offer and said unique id may be broken in dependence on a predetermined event, such as the offer having been taken up a predetermined plurality of times or the present date being a predetermined date.

The representation may be an image of a bar code. The unique id may be wirelessly received by displaying the bar code and scanning it with a bar code scanner.

Embodiments of the present invention will now be described, by way of example, with reference to the accompanying drawings, in which:
Figure 1 Illustrates the major components of a first system according to the present invention;
Figure 2 shows the database tables of the discount administration system in Figure 1 that are central to the operation of the first system according to the present invention;
Figure 3 is a dataflow diagram illustrating the operation of the POS terminal in Figure 1;
Figure 4 is a flowchart illustrating the major steps of the process of registering a user with the discount administration system in Figure 1;
Figure 5 is a flowchart illustrating the operation of the POS terminal in Figure 1;
Figure 6 is a flowchart illustrating the processing of a discount list request by the discount administration system in Figure 1;
Figure 7 is a flowchart illustrating part of the operation of the POS terminal in Figure 1 in more detail;
Figure 8 illustrates the major components of a second system according to the present invention;
Figure 9 shows the database tables of the discount administration system in Figure 8 that are central to the operation of the second system according to the present invention;
Figure 10 is a dataflow diagram illustrating the operation of the POS terminal in Figure 8;
Figure 11 is a flowchart illustrating the major steps of the process of registering a user with the promotional offer administration system in Figure 8;

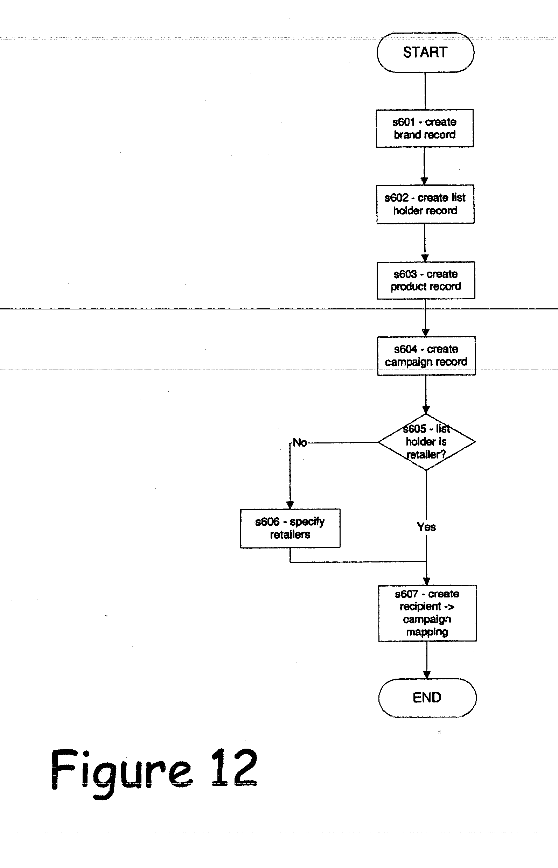

Figure 12 is a flowchart illustrating the major steps of the process of setting up a campaign with the promotional offer administration system in Figure 8;
Figure 13 is a flowchart illustrating the operation of the POS terminal in Figure 8;
Figure 14 is a flowchart illustrating the processing of a discount list request by the promotional offer administration system in Figure 8;
Figure 15 is a flowchart illustrating part of the operation of the POS terminal in Figure 8 in more detail; and
Figure 16 is a flowchart; illustrating the processing of claimed offers by the administration system.

### First Embodiment

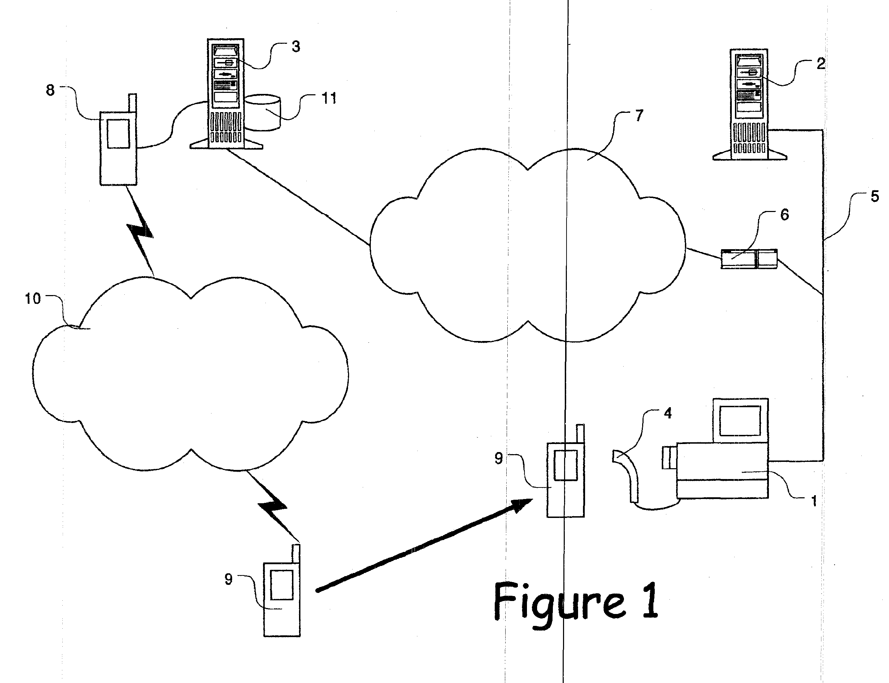

Referring to Figure 1, a first system according to the present invention comprises a point-of-sale (POS) terminal 1, a back office system 2 and a discount administration system 3. The POS terminal 1 includes a bar code scanner 4 and communicates with the back office system 2 via a local area network 5. Communication between the POS terminal 1 and the discount administration system 3 is via a router/firewall 6 and a wide area network 7 such as the Internet. The POS terminal 1 and the back office system 2 are located, in this example, in a supermarket.

The discount administration system 3 includes a mobile phone 8 to enable it to send SMS (short message service) messages to a user's mobile phone 9 via a mobile phone network 10. The discount administration system 3 runs web services server software. The mobile phone 8 at the discount administration system 3 may be replaced by a wired link to the message service of a mobile phone network operator. The user can take his or her mobile phone 9 to the POS terminal 1 for the transfer of identification information thereto.

The discount administration system 3 includes a relational database 11 which contains a plurality of tables.

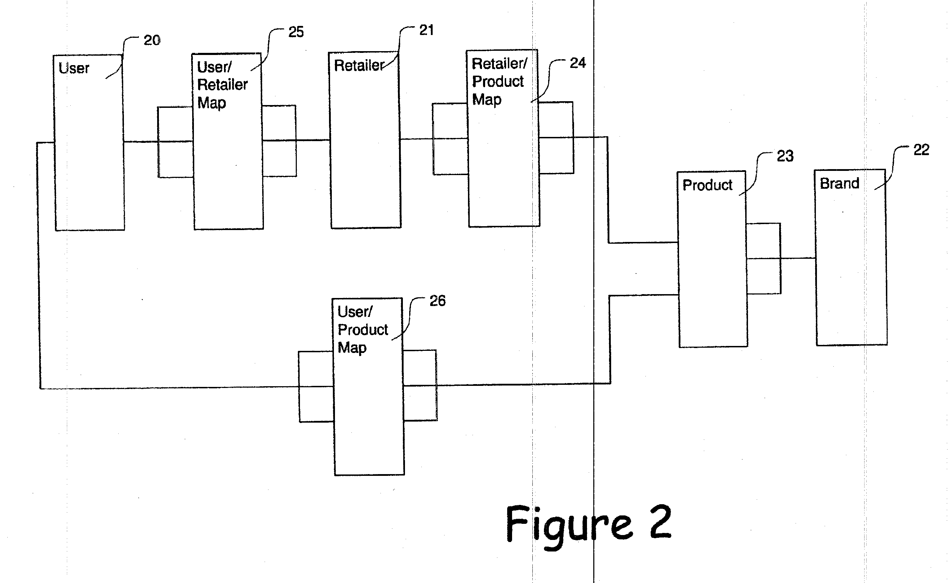

Referring to Figure 2, the database includes user, retailer, brand and product tables 20, 21, 22, 23 and mapping tables 24, 25, 26 defining mappings between retailers and products, users and retailers and users and products. The product table 23 includes a column for product UPC (Universal Product Code) codes. The retailer-product mapping table 24 identifies which products a particular retailer will give discounts on. The user/retailer mapping table 25 identifies users as belonging to loyalty schemes or the like of particular retailers. The user/product mapping table 26 identifies whether a user is entitled to a discount on a particular product. There are additional tables containing, for example, user contact information.

The POS terminal 1 comprises a microcomputer provided with input and output devices, such as the bar code scanner 4, adapted for processing purchases and payments.

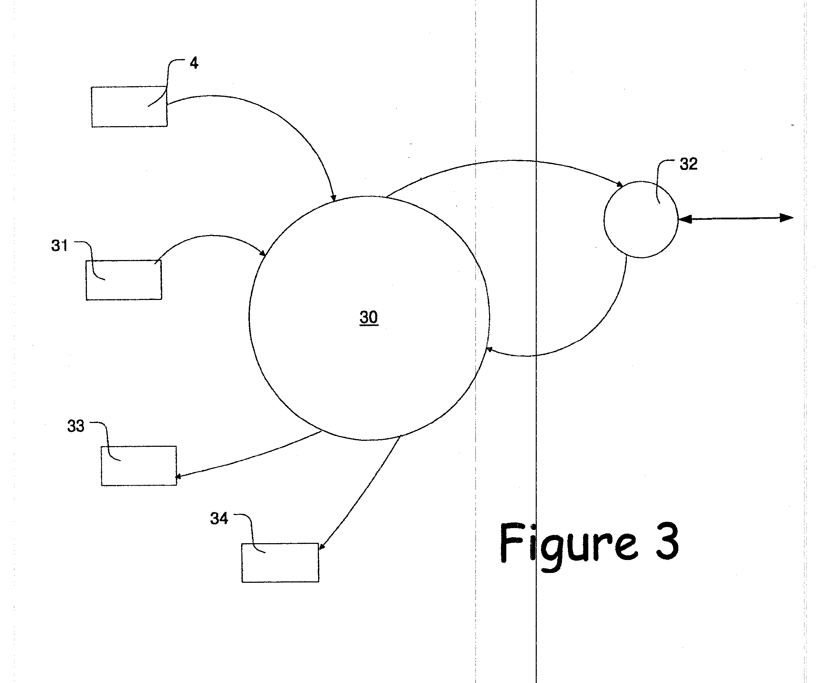

Referring to Figure 3, the POS terminal 1 runs a message-based operating system, such as one of the varieties of Microsoft (RTM) Windows and a POS application program 30. Amongst otherfunctions, the POS program 30 receives bar code data from the bar code scanner 4 and user inputs from a keypad 31, sends requests for product prices to the back office system 2 in dependence on received bar code data using a TCP/IP stack 32, displays information on a display 33 and prints out receipts, credit card authorisations and the like using a printer 34. The prices received from the back office system 2 are used for calculating customers' bills.

The process of obtaining a discount on a purchase will now be described.

A user may be registered with the discount administration system 3 as part of registering for a retailer loyalty programme or directly with the operator of the discount administration system 3.

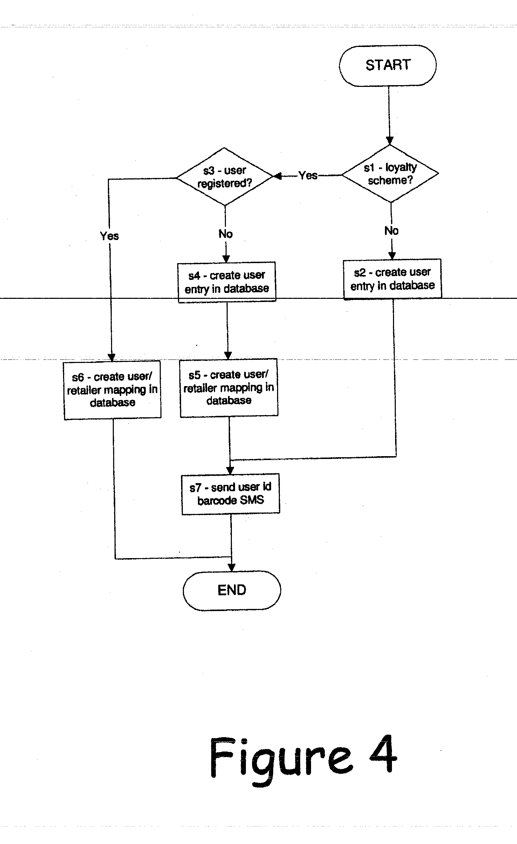

Referring again to Figures 2 and 4, in the user registration process, it is first determined whether the user is being registered as part of a loyalty scheme registration (step s1). If the user is not being registered as part of a loyalty scheme, an entry is created in the database for the user (step s2). This process involves generating a unique id for the user and storing this in the user table 20.

If the registration is part of a loyalty scheme registration (step s1), it is determined whether an entry already exist in the user table 20 for the user (step s3). This could be achieved by matching name and address information provided by the loyalty scheme operator with user data in the database. However, it is preferred that the loyalty scheme operator would obtain the user's id from the user as part of the loyalty scheme registration and pass this on to the discount administration system's operator.

If the user is not already registered (step s3), a new entry is created (step s4) in the same way as in step s2. in either case, a mapping between the user and the retailer operating the loyalty scheme is created in the user/retailer mapping table 25 (steps s5 and s6 respectively).

In the cases where a new user is registered, a bar code, corresponding to the new user's unique id, is sent to the user's mobile phone 9 in a messaging service, e.g. SMS or MMS, message (step s7). The bar code can be stored in a message folder in the mobile phone 9 but is preferable displayed on the mobile phone's screen where the network operator logo is normally found.

In order for a discount to be available, a brand owner and/or a retailer must decide to offer it.

In the case of a brand owner offering a discount, the product to which the discount applies is added to the product table 23, if necessary, and each user for whom the discount is available is then linked to the product by an entry in the user/product mapping table 26. The user/product mapping table entry identifies details of the discount amount and any additional criteria, e.g. two purchases required to get the discount, by including this information itself or by reference to another table. The discount may be made available to all users or a subset thereof selected on a demographic or geographic basis.

In the case of a retailer offering a discount to everyone, the product to which the discount applies is added to the product table 23, if necessary. The product table row need not have a reference to a row in the brand owner table. A row is then added to the retailer/product mapping table 24 linking the product to the retailer. The new retailer/product mapping table row identifies details of the discount amount and any additional criteria, e.g. two purchases required to get the discount, by including this information itself or by reference to another table. A row linking each user to the product is then added to the user/product mapping table and a flag is set therein to show that the discount is retailer-limited.

In the case of a retailer offering a discount to loyalty scheme members, the product to which the discount applies is added to the product table 23, if necessary. The product table row need not have a reference to a row in the brand owner table. A row is then added to the retailer/product mapping table 24 linking the product to the retailer. The new retailer/product mapping table row identifies details of the discount amount and any additional criteria, e.g. two purchases required to get the discount, by including this information itself or by reference to another table. A user-limited flag is also set in the new entry. A row linking each user to the product is then added to the user/product mapping table and a flag is set therein to show that the discount is retailer-limited.

The process of providing discounts to a user at the POS terminal 1 will now be described.

The user owning the mobile phone 9 visits the supermarket where the POS terminal 1 is located and collects the items to be purchased in a basket or cart. The items to be purchased are then taken to the POS terminal. Broadly, the POS terminal's operator scans the bar codes on the items to be purchased and then scans the user's id bar code on the screen of the mobile phone 9. Then the total purchase price is reduced by any discounts to which the user is entitled, having regard to the items being purchased.

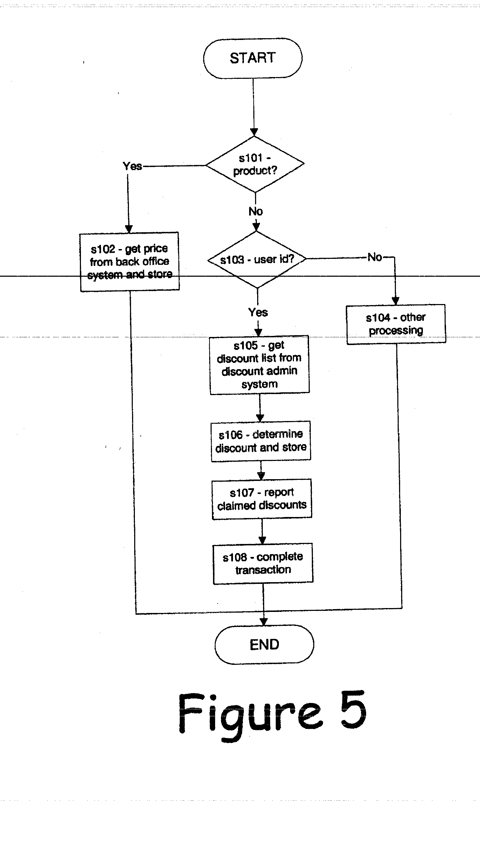

Referring to Figure 5, when a bar code is scanned using bar code scanner 4, the bar code value is supplied to the POS program 30 which first determines whether the bar code was a UPC (Universal Product Code) (step s101). If the code was a UPC value, the POS program 30 requests the price of the product from the back office system 2 using the TCP/IP stack32. Generally, the price will be returned and stored. Errors, e.g. unrecognised code, are handled in a conventional manner and the error handling has been omitted from Figure 5 in the interests of clarity.

If the bar code value is not a valid UPS value (step s101), it is determined whether the value is in a predetermined range reserved for discount administration system user ids (step s103). If the value is not such a user id, e.g. from a paper coupon, appropriate processing, which is not relevant to the present invention, is performed (step s104).

However, if the bar code appears to be a valid user id, e.g. within the range reserved therefor, (step s103), the POS program 30 sends a request to the discount administration system 3, using the TCP/IP stack 32, for a list of discounts available to the user identified by the id at the supermarket in which the POS terminal 1 is located. The discount list is provided by means of a web service, taking advantage of the encryption and authentication schemes available for http.

The body of the request is generally of the form:

```
                       <getDiscountList>
                               <userId>barcode value</userId>
                               <retailerId>retailer id</reLailerId>
                       </getDiscountList>
```

When the request has been received by the discount administration system 3, and found to be formally correct, the userld and retailerld parameter are used to query the database 11.

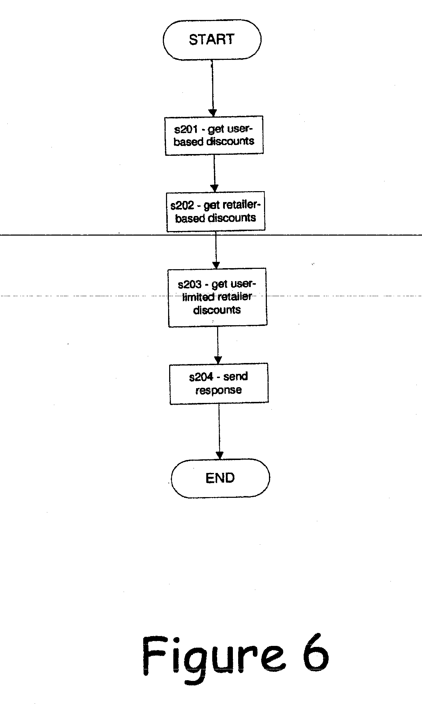

Referring to Figure 6, the database is queried to obtain a list comprising the products for which the user can obtain a discount anywhere (step s201). In the present example, this query could be, in SQL:
SELECT product.upc, user_prod_map.limitation,
user_prod_map.discount FROM
product, user, user_prod_map WHERE
user.id = *userId* AND
user.index = user_prud_map.user AND
product.index = user_prod_map.product

Italics indicate a parameter value from the request message.

The database 11 is then queried for a list comprising the products for which the retailer is offering all users a discount (step s202). In the present example, this query could be in SQL:
SELECT product.upc, retailer_prod_map.limitation,
retailer_prod_map.discount FROM
product, user, user_retailer_map, retailer_prod_map
WHERE
   retailer.id = *retailerId* AND
   retailer.index = user_retailer_map.retailer AND
   retailer.index = retailer_prod_map.retailer AND
   retailer_prod_map.user_limited = 'False' AND
   product.index = retailer_prod_map.product AND
   user.id = *userId* AND
   user.index = user_prod_map.user AND
   product.index = user_prod_map.product

italics indicate a parameter value from the request message.

Finally, the database 11 is queried to obtain a list comprising the products for which the retailer is offering loyalty scheme users a discount (step s203). In the present example, this query could be in SQL:
SELECT product.upc, user_prod_map.limitation,
retailer_prod_map.discount FROM
product, user, user_prod_map WHERE
user.id = *userId* AND
retailer.id *retailerId* AND
user.index = user_retailer_map.user AND
retailer.index = user_retailer_map.retailer AND
retailer_prod map.user_limited = 'True' AND
retailer.index = retailer_prod_map,retailer AND
product.index = retailer_prod_map.product AND
user.index = user_prod_map.user AND
product.index = user_prod_map.product

Italics indicate a parameter value from the request message.

The preceding queries could be combined into a single SELECT statement.

Each of these queries provides a UPC code, a limitation, if any, and a discount amount for each product on which a discount is available. A response message is constructed from the query results (step s204). The body of the response message is generally of the form:

```
           <getDiscountListResponse>
                    <products>
                            <product>
                                     <upc>UPC</upc>
                                     <limitation>limitation</limitation>
                                     <discount>discount</discount>
                            </product>
                            <product>
                            </product>
                    </products>
           </getDiscountListResponse>
```

The limitation may be a code or an algorithm that can be evaluated by the POS terminal 1.

Referring again to Figure 5, when the response has been received, the POS program 30 determines the total discount (step s106).

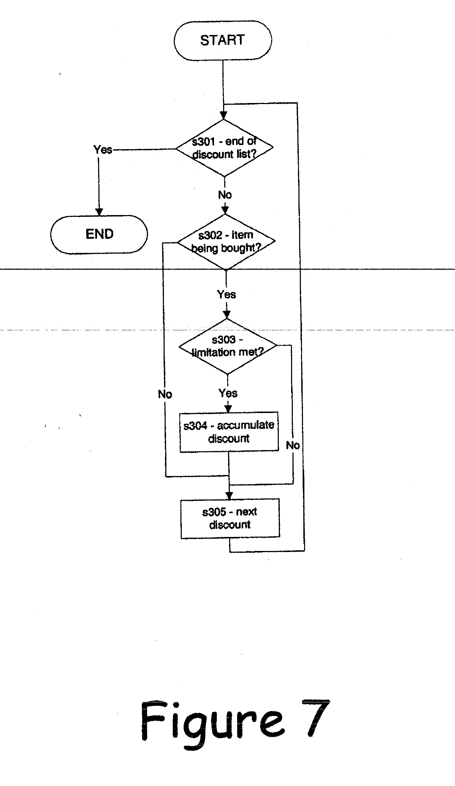

Referring to Figure 7, in order to determine the total discount, the POS program 30 searches the list of scanned bar codes for each of the UPC codes in the returned discounts (steps s301, s305). In each case where there is a match (step s302), the POS program 30 determines whether any associated limitations have been met (step s303) and, if so, adds the associated discount to an accumulated discount value (step s304).

Referring back to Figure 5, when all of the returned discounts have been processed, the POS program 30 reports the claimed discounts to the discount administration system 3 again using a web service method (step s107).

The body of the request may be generally of the form:

```
                       <setDiscountsClaimed>
                                <userId>barcode value</userId>
                                <discounts>
                                        <upc>product upc</upc>
                                </discounts>
                       </setDiscountClaimed>
```

The discount administration system 3 then removes the rows linking the user to the discounted products from the user/product mapping table.

Finally, the POS terminal 1 subtracts the total discount from the total purchase price for the scanned goods and completes the transaction in the conventional manner step s108).

The discount administration system 3 sends users SMS messages notifying the users of discounts that are available. These messages may be triggered by one discount having been taken advantage of. For example, on a hot summer's day a hardware retailer may decide to offer discounts on barbecue equipment. This discount is notified to the discount administration system 3 where it is recorded in the database 11. Users are then alerted to the discount using an SMS message.

If a user buys a barbecue from the retailer, the claiming of the discount is registered by the discount administration system 3. On registering the claiming of the discount, the discount administration system 3 sends another SMS message to the user to thank him or her for his or her purchase and to remind the user that sausages or steaks are available at a discount from another retailer.

### Second Embodiment

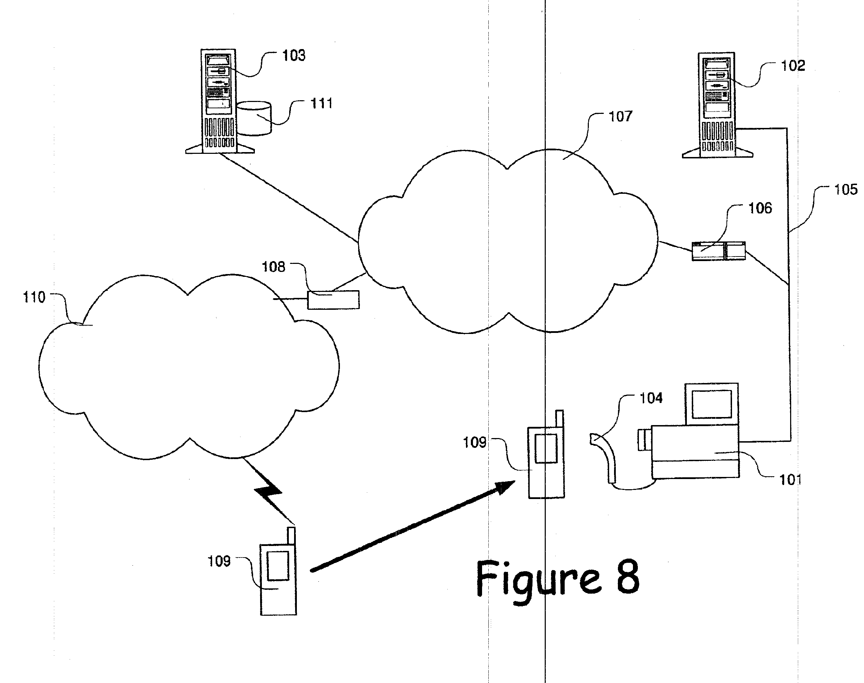

Referring to Figure 8, a second system according to the present invention comprises a point-of-sale (POS) terminal 101, back office system 102 and a promotional offer administration system 103. The POS terminal 101 includes a bar code scanner 104 and communicates with the back office system 102 via a local area network 105.

Communication between the POS terminal 101 and the promotional offer administration system 103 is via a router/firewall 106 and a wide area network 107 such as the Internet. The POS terminal 101 and the back office system 102 are located, in this example, in a supermarket.

The promotional offer administration system 103 can communicate with a message service centre 108 of a mobile phone network 110 via a wide area network 107, such as the internet, to enable the promotional offer administration system to send SMS (short message service) messages to users' mobile phones 109 via a mobile phone network 110.. Alternatively, the promotional offer administration system 103 may communicate with a single system (not shown) which provides an interface to a plurality of mobile phone networks.

The promotional offer administration system 103 runs web services server software. The user can take his or her mobile phone 109 to the POS terminal 101 for the transfer of identification information thereto.

The discount administration system 103 includes a relational database 111 which contains a plurality of tables.

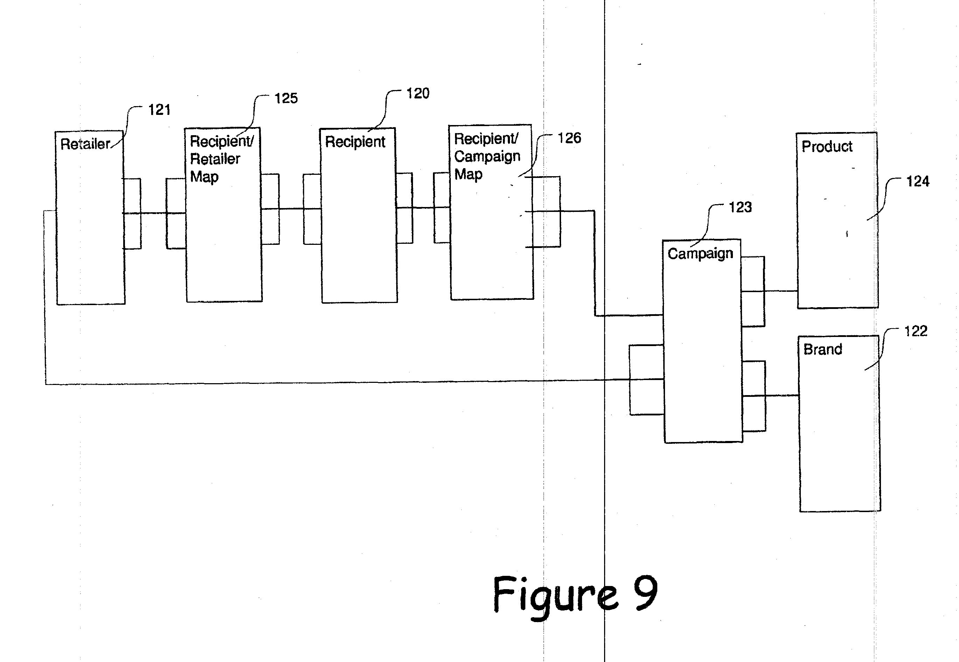

Referring to Figure 9, the database includes recipient, retailer, brand, campaign and product tables 120, 121, 122, 123, 124 and mapping tables 125, 126 defining mappings between retailers and recipients and between recipients and campaigns. The product table 124 includes a column for codes uniquely identifying products. These codes may obey any convention used in the retail industry, e.g. UPC. The campaign table 123 describes promotional offer campaigns. It contains a column that creates a join to records in the product table 124, identifying which product is the subject of a promotional offer. The campaign table 123 also contains a column defining the characteristics of promotional offers to be communicated to a point of sale 101, including the products that are required to be present in a customer's purchases in order to qualify for the promotional offer. These required products are not, however, represented in the product table 124. The campaign table 123 also contains columns that create joins to records in the brand table 122 and the retailer table 121. The retailer table describes retailers and other agencies that own lists of recipients for promotional offers. Each promotional offer campaign is directed at a part or the whole of a single recipient list. The brand table 122 describes any agency that is responsible for instigating a promotional offer campaign. The recipient table 120 describes individuals who have registeredto receive promotional offers from the system. The recipient-retailer table 125 creates a join between the recipient and retailer tables 120, 121. it is the recipient-retailer table 125 that defines which lists each recipient belongs to. The recipient-campaign table 126 creates a join between the recipient and campaign tables, defining which promotional offer campaigns a recipient has been selected to participate in. There are additional tables to serve other data needs of the promotional offer administration system. For instance, information regarding take up rates for different campaigns which can be provided to campaign sponsors. This information is available substantially in real time which is enormously quicker than in the case of paper coupons.

The POS terminal 101 comprises a microcomputer provided with input and output devices, including the bar code scanner 4, adapted for processing purchases and payments.

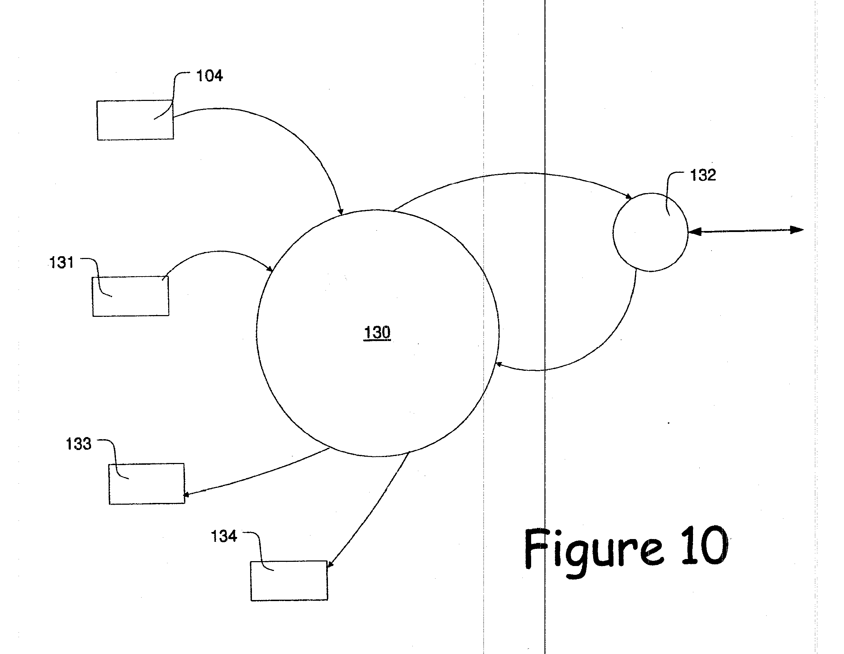

Referring to Figures 8 and 10, the POS terminal 101 runs a message-based operating system, such as one of the varieties of Microsoft (RTM) Windows and a POS application program 130. Amongst other functions, the POS program 130 receives bar code data from the bar code scanner 104 and user inputs from a keypad 131, sends requests for product prices to the back office system 102 in dependence on received bar code data using a TCP/IP stack 132, displays information on a display 133 and prints out receipts, credit card authorisations and the like using a printer 134. The prices received from the back office system 102 are used for calculating customers' bills. The POS program also obtains promotional offer descriptions from the remote promotional offer administration server 103. This operation may be carried out by a separate software entity 132 with a software interface to the POS software or which shares a data source with the POS software. In this way, no changes will be required to existing POS software in the deployment of the system.

The process of obtaining a discount or any other benefit of a promotional offer will now be described.

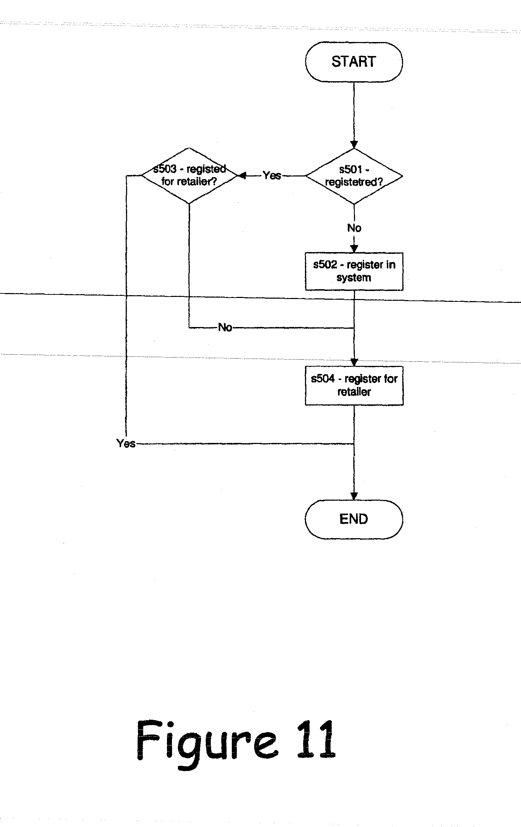

Referring to Figures 9 and 11, in the registration process it is first determined whether an entry already exists in the recipient table 20 for the user (step s501). Matching is by mobile phone number or IMSI. The user may be registering by text message, in which case the mobile phone number of the user can be captured from the text message. Alternatively, data about users wishing to register can be gathered by any other means and placed in a file for upload to the promotional offer administration system. If the user does not already exist in the recipient table a new recipient record is created in the database for the user (step s502). This process involves generating a unique id for the user.

Whether or not registration takes place by text message or by file upload a retailer or list holder must be specified. If the user was already registered, having a record in the recipient table, the promotional administration system will check whether he or she is already included in the list of the retailer specified during the registration process (step s503). If a mapping does not already exist or if the user is newly registered with the promotional offer administration system, a mapping between the user's recipient record and the retailer is created in the recipient-retailer mapping table 125 (step s504).

In the cases where a new user has been registered with the promotional offer administration system, a bar code, corresponding to the new user's unique id, is sent to the user's mobile phone 109 in an SMS message. The bar code can be stored in a message folder in the mobile phone 109 or can be displayed on the mobile phone's screen where the network operator logo is normally found.

In order for a promotional offer to be available, a brand owner and/or a retailer must decide to offer it.

In order to put a promotional offer into effect, a record must be created for the brand associated with the campaign in the brand table 122 (step s601). A record must also be created for the retailer or list holder associated with the campaign in the retailer table 121, which may include a list of unique identifiers for stores associated with the retailer, such as postal or zip codes (step s602). A record in the product table 124 must be created for the product to which the promotional offer applies (step s603).

Once the retailer brand and product records are created and the retailer or list holder has one or more recipients registered for its list, a campaign record can be added to the campaign table 123 (step s604). The campaign record includes a definition of all parameters required by POS systems in order to process the promotional offer. This definition may include identifiers for products that must be present in a customer's purchases for the offer to be valid. The campaign record will also include identifiers for the brand, product and retailer or other list holder to be used. If the list holder is not a retailer with store outlets (step s605), specific retailers, where the offer is to be accepted, are specified (step s606). A field in the campaign record will be used to specify a selection of stores belonging to the target retailer or retailers where the offer is to be valid. A budget will be set for the campaign in the record and a value associated with each individual redemption. A number of users from the retailer or list holder's list can be specified to participate in the campaign, or alternatively a pre-defined segment of users can be selected to participate. A mapping is then created in the recipient-campaign table 126 for each of the users who have been included in the promotional offer campaign (step s607).

The process of providing a promotional offer to a user at the POS terminal 101 will now be described.

The user owning the mobile phone 109 visits the supermarket where the POS terminal 101 is located and collects the items to be purchased in a basket or cart. The items to be purchased are then taken to the POS terminal 101. Broadly, the POS terminal's operator scans the bar codes on the items to be purchased and then scans the user's id bar code on the screen of the mobile phone 109. If the items being purchased by the user fulfil the requirements of one or more promotional offers the total purchase price will be reduced by any discounts to which the user is entitled, and any other offer benefits will be applied.

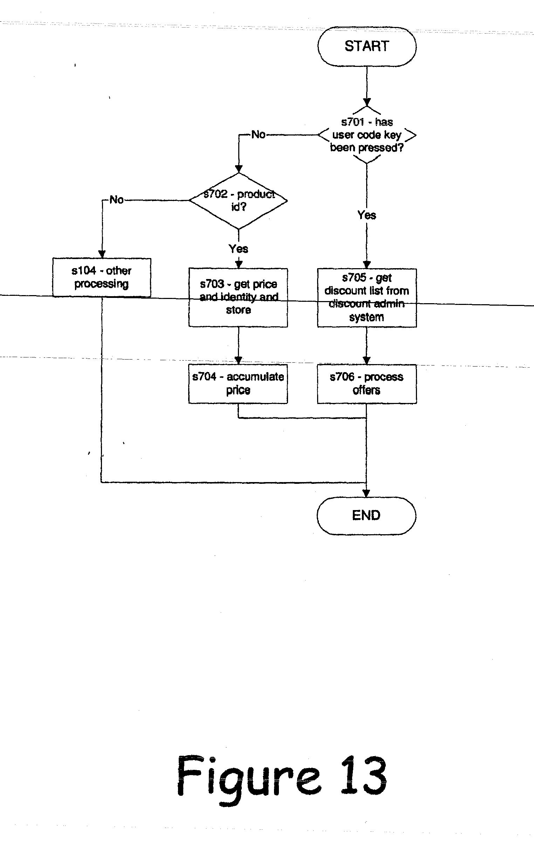

Referring to Figure 13, when a barcode is scanned using bar code scanner 104, the bar code value is supplied to the POS program 130 and to any additional software deployed in the POS environment as part of the system 32. These software entities must determine whether the bar code was a product code or a user id and act accordingly (s701). In the present embodiment, the POS terminal 101 has a key that can be pressed by the operator immediately prior to the scanning of a user id.

The existing POS software 130 will respond to the scanning of a product code that has a correct format (s702) by performing its normal processing, which will consist of a check against a data source 132, using the TCP/IP stack, for the identity and price of a product item by code (step ,s703). A running total of the value of the user's purchases is kept (step s704).

If a scanned bar code is flagged as a user id, the POS software 130 will not perform its normal product check. The POS software 130 will instead send a request to the promotional offer administration system 103, via a WAN 7, to obtain a list of promotional offers available to the particular user (identified by user id) at the supermarket (identified by a store id) in which the POS terminal 1 is located (step s705).

The offer list is provided by means of a web service, taking advantage of the well-known encryption and authentication schemes available for http.

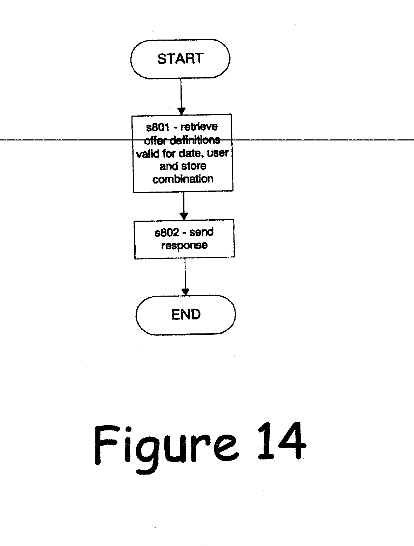

Referring to Figure 14 which ignores exception-handling in the interests of clarity, when a valid request has been received by the promotional offer administration system 103, the user id and store id parameters contained in the request are used to query the database 111. The database is queried to obtain a list of promotional offer definitions for active campaigns that the user has been selected to participate in, and which relate to the store that originated the request (step s801).

Each offer description returned by the web service (step s802) contains a list of offer constraints that may include the identifiers for products that must be among the user's purchases, optionally the amount or percentage of discount to be applied and other information such as messages to appear on the till receipt.

Referring again to Figure 13, when the response from promotional offer administration system 103 has been received, the POS program 130 processes the offers (step s706).

The processing of the offers (step s706) may be performed by custom POS software 130. However, additional software may be provided to process the offers and interact with conventional offer handling POS software 130.

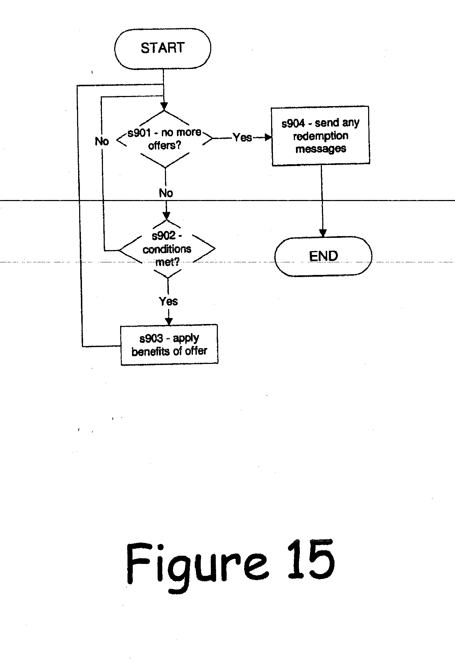

Referring to Figure 15 which illustrates step s706 in more detail, for each offer description (step s901), it is determined whether the offer constraints are met by the collection of scanned products whose ids were stored in step s703 in Figure 13 (step s902). If the conditions are met (step s902), the offer is put into effect (step s903) otherwise the process moves on to the next offer.

If the offer entails a discount, the POS software 130 or the additional software will calculate the total discount and apply it to the bill.

Other operations may also be required of the POS software 130 as a feature of an applicable offer, such as the display of a message on the till roll.

The POS terminal 101 completes the transaction in the conventional manner, processing payment for the discounted total cost of the basket items (s108).

When all of the offers have been processed (step s901), a record, including offer and user ids, of any claimed offers is sent to the promotional offer administration system 103 (step s904) as a web services method call request.

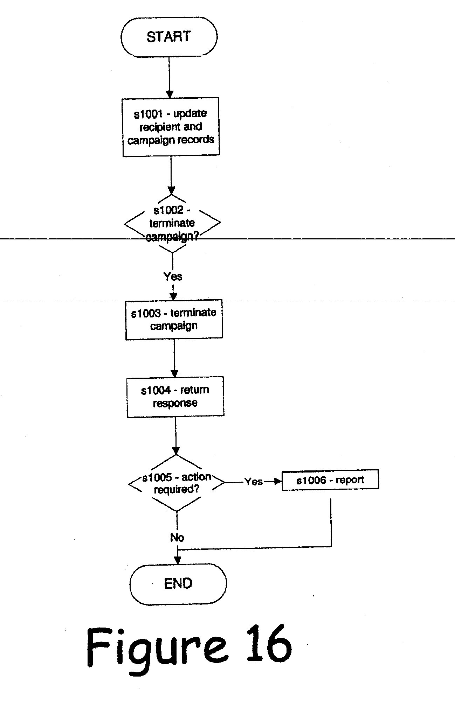

Referring to Figure 16 which ignores exception-handling in the interests of clarity, when the promotional offer administration system receives a request containing a record of claimed offers, it sets flags indicating that redemptions have occurred in the recipient-campaign database table 126.

Records are updated by searching on user id and promotion id (step 1001). Once the redemption flags have been set the identified offer will no longer be available to the identified user. Additionally the campaign table records, relating to each promotional offer for which redemptions have occurred will be updated, both the running total of redemptions and, where the campaign budget has been exceeded by redemptions, the status of the campaign, which may be set to 'terminated' (step s1002). If a campaign must be terminated (step s1002), this is carried out (step s1003).

Some offers available to users of the system may entail rewards that are implemented by systems other than a retailer's POS, for example a discount on the user's mobile phone bill. If this is the case in relation to any redeemed offers (step s1005), the promotional offer administration system 103 will provide the appropriate remote systems with data concerning the required reward (step s1006), on receiving notification of an offer redemption by a user. The data may be transmitted over a WAN, such as the Internet.

The promotional offer administration system 103 sends users SMS messages notifying the users of offers that are available. These messages may be triggered by one offer having been taken advantage of. For example, on a hot summer's day a hardware retailer may decide to offer discounts on barbecue equipment. This discount is notified to the promotional offer administration system 3 where it is recorded in the database 11. Users are then alerted to the discount using an SMS message.

If a user buys a barbecue from the retailer, the claiming of the discount is registered by the promotional offer administration system 103. On registering the claiming of the discount, the promotional offer administration system 103 sends another SMS message to the user to thank him or her for his or her purchase and to remind the user that sausages or steak are available at a discount from another retailer.

Bar codes are a convenient way of presenting a code to a POS terminal because they typically already have bar code scanners. However, other methods of communicating a code from a mobile phone to a POS terminal may be employed. For example, irDA, Bluetooth and WiFi protocols could be used.

The achieving of an aim of a system according to the present invention, i.e. increasing purchasing of particular products or at particular store, does not require that the administrative system know more about a user than an associated mobile phone number. Indeed, the "user" may be a composite of a plurality of persons who share a mobile phone, e.g. members of the same family. Thus, privacy concerns that members of the public may have can be assuaged.

The communication between the discount administration system or the promotional offer system and a user's mobile phone on the other need not be by SMS. For instance, the bar code may be provided by WAP as an element of a deck. Alternatively, the mobile phone may be programmed over-the-air with a J2ME (Java 2 Micro Edition) MiDlet that requests the bar code from the administrations system and presents it on the phone's display when required to do so by the user. Furthermore, the SMS messaging may be replaced by other messaging systems such as for example email, Jabber and speech calls, in the case of the notification of available offers, which may be machine-generated.

SMS messaging is considered to be best initially because of its ubiquity. However, as more capable user agents approach universal adoption, other messaging techniques become more attractive. For example, http may be used for communication between user agents and administration systems rather than a mobile phone messaging protocol.

The term "mobile phone" is not to be construed narrowly and means any portable device providing a telephony function. Other communication devices, such a Blackberry email terminals may also be used for receiving and making available the user id to point of sale equipment. The user agent may be a composite device, e.g. a communication device which communicates with the administration systems and a PDA which communicates with point of sale apparatus.

## Claims

1. A point of sale terminal comprising:
a scanner means for reading product ids from products;
a machine-to-machine data input device for receiving a user id from a communication user agent;
network communication means; and
processing means operable to accumulate a total purchase price in dependence on product Id codes read by the scanner means and store said code values,
wherein the processing means is configured to be responsive to a user id from said data input device to:
transmit said user id to a remote location in a request message via the network communication means;
receive a response to said request message via the network communication means, the response containing a list of product id codes; and
reducing the accumulated purchase price in dependence on matches between elements in said list and said stored product codes.

2. A point of sale terminal according to claim 1, wherein the processing means is configured to be further responsive to a user id from the data input device to report said matches to a remote location via said network communication means.

3. A point of sale terminal according to claim 1 or 2, wherein the scanner means is a bar code scanner.

4. A point at sale terminal according to claim 3, wherein the machine to machine data input device comprises said bar code scanner.

5. A point of sale terminal according to claim 4, wherein the processing means is configured to identify a user id by comparing a code from the bar code scanner with a range of codes not reserved for product ids.

6. A transaction apparatus comprising a point of sale terminal according to claim 3, 4 or 5 and a communication user agent, wherein the communication user agent is operable to display a bar code representing a user id code.

7. An administration apparatus comprising:
a WAN interface;
a mobile communication network interface;
a database containing data linking, directly or indirectly, a user id to one or more product ids and associated discount amounts; and
processing means,
wherein the processing means is configured for sending said user id to a communication user agent via the mobile communication network interface and for responding to a request message, containing said user id, received via the WAN interface, by generating a response message containing product ids and discount amounts linked to said user id in the database, and sending the response message to the source of the request message via the WAN interface.

8. An apparatus according to claim 7, wherein the mobile communication network interface is an interface to a messaging service of a mobile phone network.

9. An apparatus according to claim 7 or 8, wherein the processing means is configured to be responsive to a further message, containing said user id and a product id, from said source to remove the link between said user id and the product id in the database.

10. A system including a transaction apparatus according to claim 6 and an administration apparatus according to claim 7, 8 or 9, wherein the discount administration apparatus is located at the remote location and said source is the pont of sale terminal.
